(19) Europäisches Patentamt
European Patent Office
Office européen des brevets

(11) **EP 3 176 954 B1**

(12) **EUROPÄISCHE PATENTSCHRIFT**

(45) Veröffentlichungstag und Bekanntmachung des Hinweises auf die Patenterteilung:
**26.09.2018 Patentblatt 2018/39**

(51) Int Cl.:
***H04B 5/00*** *(2006.01)*

(21) Anmeldenummer: **15197594.3**

(22) Anmeldetag: **02.12.2015**

(54) **VERFAHREN ZUR ÜBERTRAGUNG VON ANALOGER UND DIGITALER INFORMATION BEI DER ÜBERTRAGUNG VON ENERGIE**

METHOD FOR THE TRANSMISSION OF ANALOG AND DIGITAL INFORMATION IN THE TRANSMISSION OF ENERGY

PROCEDE DE TRANSMISSION D'INFORMATIONS NUMERIQUES ET ANALOGIQUES LORS DE LA TRANSMISSION D'ENERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.06.2017 Patentblatt 2017/23**

(73) Patentinhaber: **etatronix GmbH**
**66606 St. Wendel (DE)**

(72) Erfinder: **Huwig, Dominik**
**66839 Schmelz (DE)**

(74) Vertreter: **Hofstetter, Schurack & Partner**
**Patent- und Rechtsanwaltskanzlei**
**PartG mbB**
**Balanstrasse 57**
**81541 München (DE)**

(56) Entgegenhaltungen:
**US-A1- 2007 014 373      US-A1- 2012 329 405**
**US-A1- 2013 260 676      US-A1- 2014 340 033**

**Beschreibung**

Die vorliegende Erfindung betrifft ein Verfahren zur Übertragung von analoger und digitaler Information bei der Übertragung von Energie zwischen einem Leistungssender und einem davon galvanisch getrennten Leistungsempfänger. Das Verfahren umfasst dabei den Schritt des Bereitstellens der zu übertragenden analogen und digitalen Information. Die Erfindung betrifft überdies eine Vorrichtung zur Durchführung eines derartigen Verfahrens.

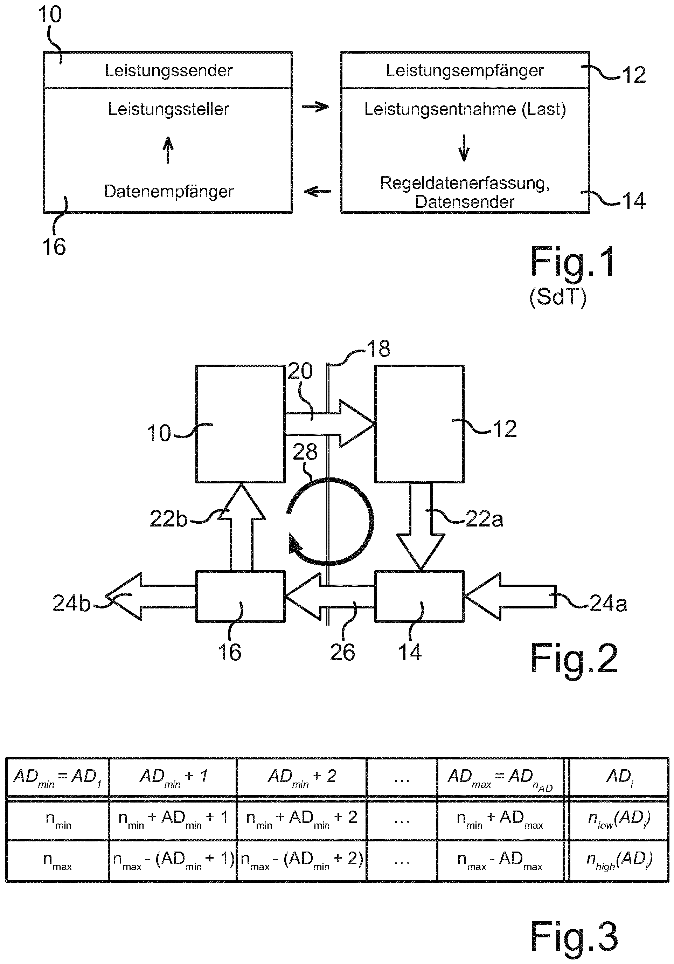

Zur Steigerung des Wirkungsgrads und zur Minimierung des benötigten Bauvolumens des Leistungsempfängers eines kabellosen Energieübertragungssystems findet die Leistungsstellung in vielen Fällen am Leistungssender statt. Demnach wird leistungssenderseitig gesteuert, welche Energie dem Empfänger bereitgestellt wird. Da in den meisten Fällen jedoch eine geregelte Ausgangsgröße, beispielsweise eine Ladespannung und/oder ein Ladestrom einer Batterie, benötigt wird, tritt hierbei die Schwierigkeit auf, dass zum Schließen der Regelschleife eine Information benötigt wird, welche nur empfängerseitig gemessen werden kann, die Stellgröße aber senderseitig vorhanden ist. Um das Schließen einer Regelschleife und damit eine Regelung dennoch zu ermöglichen, ist eine Datenübertragung vom Leistungsempfänger zum Leistungssender oft unumgänglich. Figur 1 zeigt in diesem Zusammenhang in schematischer Darstellung den dabei auftretenden Leistungs- und Signalfluss. Demnach befindet sich auf der Seite des Leistungssenders 10 zunächst der Leistungssteller. Dieser überträgt eine Leistung zum Leistungsempfänger 12, welcher die empfangene Leistung an eine Last abgibt. Leistungsempfängerseitig findet weiterhin die Regeldatenerfassung statt, wobei die Regeldaten unter Verwendung eines Datensenders 14 an einen leistungssenderseitigen Datenempfänger 16 übermittelt werden. Dieser steuert dann entsprechend den empfangenen Daten den leistungssenderseitigen Leistungssteller.

Neben der möglichst schnellen und exakten Datenübertragung von digitalisierten Regelinformationen ist zusätzlich meist auch eine Übertragung von Statusinformation, wie zum Beispiel dem Ladezustand einer Batterie oder dem Schaltzustand von LEDs, erforderlich.

Bei kommerziellen Systemen kommen hierzu zwei unterschiedliche Verfahren zur Anwendung: Kabellose Energieübertragungssysteme, welche nach dem WPC-(Wireless Power Consortium) oder PMA- (Power Matters Alliance) Standard implementiert sind, nutzen eine Impedanzmodulation des Leistungssignals, um Daten vom Leistungsempfänger zum Leistungssender zu übertragen. Da hier die Leistungsübertragung als Trägerfrequenz genutzt wird, diese sich im Frequenzbereich unter 300 kHz bewegt und zusätzlich eine digitale, niederfrequente Modulation Anwendung findet, sind die Datenraten sehr gering. Als Beispiel kann beim WPC-Standard eine Datenrate deutlich unter 40 Hz ermittelt werden. Demzufolge ist die Anzahl der digitalisierten Messwerte, welche dem leistungssenderseitigen Digitalregler zugeführt werden können, deutlich limitiert, was zu einer schlechten Regelperformance führt. Was bei sich langsam ändernden Lastprofilen, wie zum Beispiel dem Laden einer Batterie, noch akzeptabel scheint, ist bei dynamischen Lasten sehr problematisch. Aufgrund der begrenzten Informationen kann der Regler schnelle Laständerungen oder Lastsprünge nicht adäquat ausregeln und es folgen starke Fluktuationen der Regelgrößen, wie zum Beispiel der Ausgangsspannung oder des Ausgangsstroms.

US2014/340033 A1 offenbart ein Verfahren zur Übertragung von analoger und digitaler Information bei der Übertragung von Energie zwischen einem Leistungssender und einem Leistungsempfänger.

Ein zweites, oft eingesetztes Verfahren zur digitalen Regelung nutzt einen getrennten Datenkanal. Als Beispiel kann ein kabelloses Übertragungssystem entsprechend der A4WP (Alliance for Wireless Power) genannt werden. Hier wird zur Datenübertragung ein zusätzlicher Bluetooth-LP-Kanal genutzt. Die Schwierigkeit eines komplexen Modulationsverfahrens besteht darin, dass die verwendeten Protokolle für eine standardisierte QAM (quadrature amplitude modulation = Quadraturamplitudenmodulation), PSK (phase shift keying = Phasenumtastung) oder FSK (frequency shift keying = Frequenzmodulation), zum Beispiel Bluetooth LE, sehr umfangreich sind, was stets eine Zeitverzögerung, eine Totzeit oder ein Delay der Auswertung zur Folge hat. Dies kann regelungstechnisch Schwierigkeiten bereiten.

Eine weitere Schwierigkeit eines komplexen Modulationsverfahrens besteht darin, dass in vielen Fällen eine umfangreiche Auswerteelektronik zur Modulation und Demodulation benötigt wird, was Zusatzkosten verursacht und den Platzbedarf auf einer Leiterplatte erhöht.

Die Aufgabe der vorliegenden Erfindung besteht darin, ein eingangs genanntes Verfahren derart weiter zu bilden, dass eine Verbesserung der Regelperformance ermöglicht wird. Die Aufgabe besteht weiterhin darin, eine entsprechende Vorrichtung zur Durchführung des Verfahrens bereitzustellen.

Diese Aufgaben werden gelöst durch ein Verfahren mit den Merkmalen von Patentanspruch 1 sowie durch eine Vorrichtung mit den Merkmalen von Patentanspruch 16.

Die mit Bezug auf das erfindungsgemäße Verfahren vorgestellten bevorzugten Ausführungsformen und deren Vorteile gelten entsprechend, soweit anwendbar, für eine erfindungsgemäße Vorrichtung zur Durchführung des erfindungsgemäßen Verfahrens.

Im Nachfolgenden werden nunmehr Ausführungsbeispiele der vorliegenden Erfindung unter Bezugnahme auf die beigefügten Zeichnungen näher beschrieben. Diese zeigen:

Figur 1        eine schematische Darstellung betreffend den Leistungs- und Signalfluss in einem System zur Übertragung elektrischer Energie zwischen einem Leistungssender und einem davon galvanisch getrennten Leistungsempfänger;

Figur 2     eine schematische Darstellung einer erfindungsgemäßen Vorrichtung zur parallelen Übertragung analoger und digitaler Daten unter Verwendung des erfindungsgemäßen Verfahrens;

Figur 3     ein Beispiel für eine Ereignistabelle, wie sie bei einer Ausführungsform des erfindungsgemäßen Verfahrens zur Anwendung gelangt;

Figur 4     die Ereignistabelle von Figur 3 für vorgegebene Werte von $n_{min}$, $n_{max}$, $n_{AD}$ und $AD_{min}$;

Figur 5     in schematischer Darstellung ein Ausführungsbeispiel einer erfindungsgemäßen Vorrichtung zur galvanisch getrennten Energieübertragung;

Figur 6     eine Darstellung, die eine zeitlich äquidistante Verteilung von Ereignissen zeigt;

Figur 7     eine Darstellung, die eine zeitlich beliebige Verteilung von Ereignissen zeigt;

Figur 8     eine schematische Darstellung zu einem ersten Ausführungsbeispiel des erfindungsgemäßen Verfahrens;

Figur 9     eine schematische Darstellung zu einem zweiten Ausführungsbeispiel des erfindungsgemäßen Verfahrens;

Figur 10     die zeitliche Abfolge der zu übertragenden Ereignisse bei Manchester-Codierung;

Figur 11     eine schematische Darstellung zu einem dritten Ausführungsbeispiel des erfindungsgemäßen Verfahrens;

Figur 12     eine schematische Darstellung zu einem vierten Ausführungsbeispiel des erfindungsgemäßen Verfahrens;

Figur 13     eine schematische Darstellung zu einem fünften Ausführungsbeispiel des erfindungsgemäßen Verfahrens;

Figur 14     eine schematische Darstellung zu einem sechsten Ausführungsbeispiel des erfindungsgemäßen Verfahrens;

Figur 15     eine schematische Darstellung zu einem siebten Ausführungsbeispiel des erfindungsgemäßen Verfahrens; und

Figur 16     eine schematische Darstellung zu einem achten Ausführungsbeispiel des erfindungsgemäßen Verfahrens.

Für gleiche und gleich wirkende Bauelemente werden dieselben Bezugszeichen verwendet.

Figur 2 zeigt in schematischer Darstellung ein Ausführungsbeispiel einer erfindungsgemäßen Vorrichtung zur galvanisch getrennten Energieübertragung, siehe Pfeil 20, zwischen einem Leistungssender 10 und einem Leistungsempfänger 12, die - wie durch die beiden parallelen Striche 18 gekennzeichnet - galvanisch voneinander getrennt sind. Vom Leistungsempfänger 12 erzeugte Regeldaten 22a sowie leistungsempfängerseitige Statusinformation 24a werden einem Datensender 14 zugeführt. Dieser überträgt in paralleler Art und Weise die analogen Regeldaten 22a in digitalisierter Form sowie die Statusinformation 24a durch Analog-Digital-Event-Modulation - wie durch den Pfeil 26 angedeutet - an die Leistungssenderseite. In einem leistungssenderseitigen Datenempfänger 16 werden die übertragenen Daten demoduliert und als digitale Statusinformation 24b einerseits sowie an den Leistungssender 10 bereitgestellte Regeldaten 22b bereitgestellt.

Das erfindungsgemäße Verfahren dient somit zur parallelen Übertragung einer digitalisierten Analoggröße mit hoher Datenrate sowie einer parallelen, digitalen Informationsübertragung mit niedrigerer Datenrate. Ohne dass die vorliegende Erfindung darauf eingeschränkt wäre, entspricht die digitalisierte Analoggröße in den nachfolgenden Ausführungsbeispielen bevorzugt einer Messgröße, welche zum Schließen einer in Figur 2 angedeuteten Regelschleife 28 nötig ist. Dies soll jedoch keine Beschränkung auf Regelinformationen bedeuten. Die digitale Information mit niedrigerer Datenrate soll in den gezeigten Ausführungsbeispielen einer Statusinformation entsprechen und ebenfalls nicht beschränkend sein.

Bei den nachfolgend gezeigten Ausführungsbeispielen der vorliegenden Erfindung ist es hinsichtlich der Regelinformationsübertragung eines Systems zur kabellosen Energieübertragung unbedeutend, ob der Digitalregler leistungssender- oder leistungsempfängerseitig implementiert ist. Im ersten Fall wird der digitalisierte Messwert oder die digitalisierte Regelabweichung vom Leistungsempfänger 12 zurück zum Leistungssender 10 übertragen und einem digitalen Regler zugeführt. Im zweiten Fall wird die Regelabweichung einem digitalen Regler bereits am Leistungsempfänger 12 zugeführt und lediglich die digitalisierte Stellgröße zurück zum Leistungssender 10 übertragen.

Auch die gezeigte Richtung der Informationsübertragung soll nicht limitiert sein. So kann das gleiche Verfahren dazu genutzt werden, einen Status- und einen digitalisierten Analogwert von einem Leistungssender 10 zu einem Leistungsempfänger 12 zu übertragen. Auch eine Halb- oder Vollduplex-Übertragung ist möglich, d.h. ein Verfahren, bei dem immer nur in eine Richtung übertragen wird, oder ein Verfahren, bei dem in beide Richtungen übertragen werden kann.

Zur digitalen Regelung einer analogen Größe, wie zum Beispiel der Ausgangsspannung eines kabellosen Energieübertragungssystems, ist stets eine Diskreditierung und Quantisierung einer Regelgröße, wie zum Beispiel der Ausgangsspannung, erforderlich. In vielen Fällen wird hierzu die zu regelnde, analoge Größe mit einem Analog-Digital-Wandler (ADC=Analog-Digital-Converter) abgetastet und zu digitalen Werten gewandelt. Hierbei wird jedem ermittelten analogen Messwert ein Digitalwert zugeordnet. Die Menge oder Anzahl der möglichen, digitalisierten Analogwerte, die im Nachfolgenden mit $n_{AD}$ bezeichnet wird, ist stets begrenzt (Quantisierung). Bei einem 12-bit ADC beträgt $n_{AD}$ beispielsweise $2^{12}=4096$. Der gemessene, digitalisierte Analogwert $AD_x$ weist in diesem Fall einen Wert zwischen 0 und 4095 auf.

Für das erfindungsgemäße Verfahren ist es unerheblich, ob dieser digitalisierte Analogwert direkt zum Leistungssender 10 übertragen wird oder leistungsempfängerseitig noch eine Weiterverarbeitung, beispielsweise durch einen Filter oder einen digitalen Regler, erfolgt. Es ist lediglich entscheidend, dass in allen Fällen die Übertragung eines digitalisierten Analogwerts erfolgt.

Um die Übertragung der nötigen Informationen möglichst effizient zu ermöglichen, wird der digitalisierte Analogwert $AD_x$ am Signalsender 14 nach Definition einer Minimalereigniszahl $n_{min}$ und einer Maximalereigniszahl $n_{max}$ direkt zu einer Anzahl an Ereignissen, welche übertragen werden sollen, umgerechnet. Dabei gilt:

$$n_{low}(AD_x)=n_{min}+f1(AD_x)$$

und

$$n_{high}(AD_x)=n_{max}-f2(AD_x).$$

Im nachfolgenden Ausführungsbeispiel sind die Funktionen f1 und f2 der einfacheren Verständlichkeit wegen sehr einfach gewählt, sodass sich Folgendes ergibt:

$$n_{low}(AD_x)=n_{min}+AD_x$$

und

$$n_{high}(AD_x)=n_{max}-AD_x.$$

Mit diesen Gleichungen lässt sich die in Figur 3 dargestellte allgemeine Ereignistabelle bestimmen. Diese basiert auf der Festlegung einer minimalen Ereigniszahl $n_{min}$, einer maximalen Ereigniszahl $n_{max}$, der Anzahl der möglichen digitalisierten Analogwerte $n_{AD}$ sowie dem minimalen digitalisierten Analogwert $AD_{min}$. Die zweite Zeile definiert einen ersten Wertebereich $n_{low}(AD_i)$, der bei $n_{min}$ beginnt und bei $n_{min}+AD_{max}$ endet. Die dritte Zeile definiert einen zweiten Wertebereich $n_{high}(AD_i)$, der bei $n_{max}$ beginnt und bei $n_{max}-AD_{max}$ endet.

Die Minimal- und Maximalereigniszahlen $n_{min}$ und $n_{max}$ können nun so gewählt werden, dass

$$n_{low}(AD_{n_{AD}} = AD_{max}) < n_{high}(AD_{n_{AD}} = AD_{max})$$

gilt.

Damit sind der erste und der zweite Wertebereich disjunkt und aus einer Anzahl n an übertragenen Ereignissen kann neben der direkten Bestimmung des ursprünglichen, digitalisierten Analogwerts auch unmittelbar bestimmt werden, ob ein Wert im Ereignisfenster $n_{low}$ (siehe Figur 3, zweite Zeile) oder im Ereignisfenster $n_{high}$ (siehe Figur 3, dritte Zeile) vorliegt.

Diese Anzahl n an Ereignissen wird nun unmittelbar über einen beliebigen Übertragungskanal übertragen. Durch den Empfang von zum Beispiel $n_{min}$ Ereignissen ist bekannt, dass der digitalisierte Analogwert $AD_{min}$ im Ereignisfenster $n_{low}$ übertragen wurde. Werden hingegen zum Beispiels $n_{max}$-($AD_{min}$+2) Ereignisse erfasst, wird der digitalisierte Analogwert $AD_{min}$+2 im Ereignisfenster $n_{high}$ übertragen.

Jedem digitalisierten Analogwert $AD_x$ wird auf diese Weise jeweils eine Ereigniszahl im Fenster $n_{low}$ und eine im Fenster $n_{high}$ gemäß $n_{low}(AD_x)$ und $n_{high}(AD_x)$ zugeordnet. Diese zusätzliche Information kann nun dazu genutzt werden, neben den digitalisierten Analogwerten auch Digitalwerte zu übertragen.

Der digitalisierte Analogwert $AD_x$ steht dem Datenempfänger 16 nach dem Empfang der Ereigniszahl n unmittelbar zur Verfügung. Das zur digitalen Signalübertragung unter Verwendung der Ereignisfenster $n_{low}$ und $n_{high}$ gegebenenfalls nötige digitale Protokoll soll nicht Bestandteil der Erfindungsmeldung sein. Es stehen demnach zwei Werte, d.h. einer im Ereignisfenster $n_{low}$ und einer im Ereignisfenster $n_{high}$, zur Verfügung, welche in unterschiedlichster Weise zur Datenübertragung genutzt werden können.

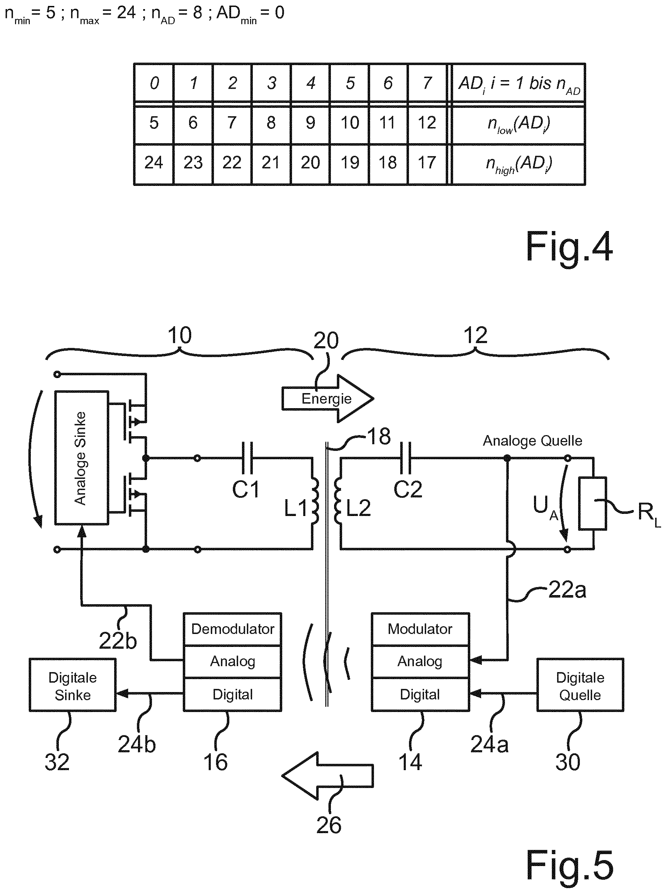

Mit Bezug auf Figur 4 soll in dem folgenden Beispiel zur Veranschaulichung $n_{AD}$=8 und die digitalisierten Analogwerte $AD_i$ (i=1...$n_{AD}$) der Menge 0, 1, 2...7 entstammen. Diese Werte sollen moduliert und übertragen werden. Es wird eine Minimalereigniszahl von $n_{min}$=5 und eine Maximalereigniszahl von $n_{max}$=24 definiert. Mit diesen kann die in Figur 4 dargestellte Tabelle erstellt werden. Aus dieser können beispielsweise bei einem digitalisierten Analogwert $AD_x$=3 die Ereigniszahlen $n_{low}(3)$=8 und $n_{high}(3)$=21 abgelesen werden.

Figur 5 zeigt als Ausführungsbeispiel einer erfindungsgemäßen Vorrichtung ein induktives und galvanisch getrenntes Energieübertragungssystem. Hier wird Energie, siehe Pfeil 20, von einem Leistungssender 10 zu einem Leistungsempfänger 12 übertragen. Zur Regelung einer exakten Ausgangsspannung $U_A$, ist diese zu erfassen (Analog Source), gegebenenfalls zu verarbeiten und dann einem Digitalregler zuzuführen. Da sich die Stellgröße der Energieübertragung auf der Sendeseite befindet, ist die Übertragung eines digitalisierten Analogwerts vom Leistungsempfänger 12 zum Leistungssender 10 nötig. Der Leistungsempfänger 12 wirkt hier als analoge Quelle (Analog Source), der Leistungssender 10 als analoger Empfänger (Analog Sink). Da neben der Regelung auch die Übertragung von digitalen Informationen möglich sein soll, ist eine digitale Datenquelle 30 und ein digitaler Datenempfänger 32 vorhanden. Der restliche Aufbau umfassend die Kondensatoren C1, C2 sowie die Induktivitäten L1 und L2 ist auf dem Gebiet einschlägig bekannt.

Die Übertragung der digitalisierten Analoginformation $AD_x$ und der Digitalinformation $D_x$ erfolgt durch einen gemeinsamen Übertragungskanal, wie zum Beispiel eine induktive Kopplung oder einen optischen Koppler (z. B. Optokoppler) unter Verwendung des erfindungsgemäßen Verfahrens.

Bei dem erfindungsgemäßen Verfahren kann eine direkte oder eine indirekte Modulation unterschieden werden: Bei der direkten ADEM werden die Ereigniszahlen $n_{low}(AD_x)$ und $n_{high}(AD_x)$ jeweils durch ein zählbares Ereignis übertragen, welches mit einer Häufigkeit von $n_{low}(AD_x)$ oder $n_{high}(AD_x)$ eintritt. Im einfachsten Beispiel einer optischen Übertragung könnte das Leuchten einer Leuchtdiode entsprechend der Ereigniszahl aktiviert und deaktiviert werden. Der Abstand der Ereignisse kann bekannt, äquidistant, aber auch beliebig sein.

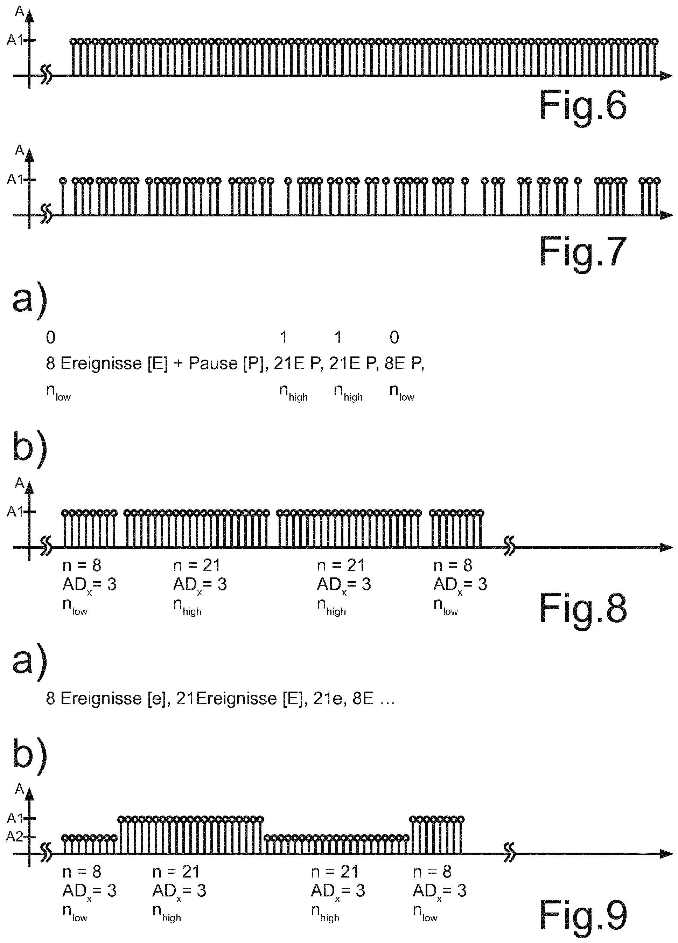

Figur 6 zeigt eine zeitliche Abfolge von Ereignissen mit einer vorgebbaren Amplitude A1 bei einer äquidistanten Verteilung von Ereignissen. Werden bei der direkten ADEM lediglich Ereignisse gezählt, kann die Amplitude variieren und spielt deshalb eine untergeordnete Rolle.

Figur 7 zeigt die entsprechende Darstellung bei einer beliebigen Verteilung von Ereignissen.

Soll zum Beispiel der digitalisierte Analogwert $AD_x$=3 übertragen werden und gleichzeitig die digitale Kombination 0,1,1,0, so können gemäß der Ereignistabelle von Figur 4 Ereignispakete entsprechend der Darstellung in Figur 8a übertragen werden. Zur Übertragung einer digitalen 0 wird demnach eine Ereigniszahl aus dem Wertebereich $n_{low}(AD_i)$ ausgewählt, zur Übertragung einer digitalen 1 eine Ereigniszahl aus dem Wertebereich $n_{high}(AD_i)$. Da, wie zuvor ausgeführt, im Beispiel ein digitalisierter Analogwert $AD_x$=3 übertragen werden soll, werden demnach zur Übertragung einer digitalen 0 acht Ereignisse E und zur Übertragung einer digitalen 1 21 Ereignisse E übertragen. Zur Unterscheidung der Ereignisse wird eine Pause P eingefügt. Das übertragene Signal, siehe Pfeil 26 in Fig. 5, ist in Figur 8b dargestellt.

Eine zusätzliche Steigerung der Übertragungsgeschwindigkeit kann dadurch realisiert werden, dass eine messtechnische Unterscheidung der Ereignispakete ermöglicht wird. In diesem Fall ist die Pause P nicht mehr erforderlich. Ist zum Beispiel eine zusätzliche Modulation der Amplitude (ASK=Amplitude Shift Keying) ermöglicht, kann anhand eines Amplitudenwechsels ein Ereignispaketwechsel festgestellt werden, wobei der digitalisierte Analogwert $AD_x$ weiterhin durch die Anzahl der Ereignisse repräsentiert wird.

Figur 9a zeigt die zu übertragenden Ereignisse, wobei ein "e" Ereignisse mit der Amplitude A2 und ein "E" Ereignisse mit der Amplitude A1 bezeichnet.

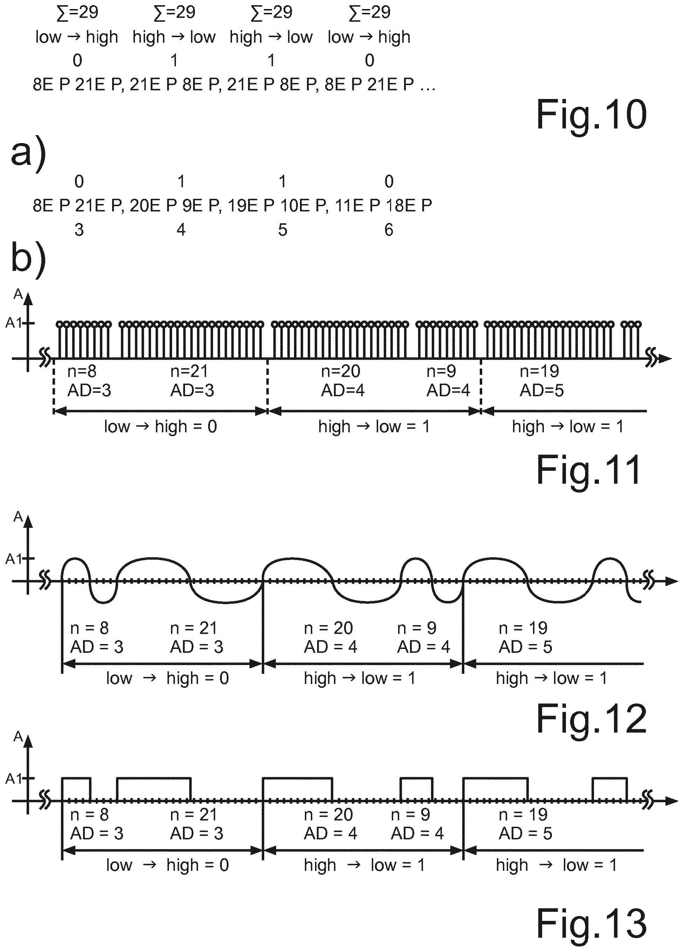

Zur digitalen Regelung ist eine äquidistante Abtastung der Messgröße oft sehr vorteilhaft. Ist dies gewünscht, kann zur digitalen Datenübertragung eine Manchester-Codierung eingesetzt werden. Wird zum Beispiel unter Verwendung äquidistanter Ereignisse gemäß Figur 6 davon ausgegangen, dass eine logische 1 durch einen High-Low-Wechsel und eine logische 0 durch einen Low-High-Wechsel beschrieben wird, und gilt weiter ein digitalisierter Analogwert für jeweils zwei Ereignispakete, liegen sowohl die digitalisierten Analogwerte als auch die Digitalwerte in zeitlich äquidistanter Form vor. Für den Digitalwert 0,1,1,0 ergibt sich die Abfolge, wie sie in Figur 10 in Kurzschreibweise dargestellt ist.

Ein digitales Symbol hat in diesem Beispiel die konstante Dauer von zwei Pausen [P] sowie 29 Ereignissen $[n_{min}+n_{max}]$ und ist demnach unabhängig vom digitalisierten Analogwert. Je nach Analogwert halbiert sich jedoch die Übertragungsgeschwindigkeit von Analog- und Digitalwert im Vergleich zu dem in Figur 8 dargestellten Anwendungsbeispiel, da ein logischer Zustand immer durch eine Kombination von low und high dargestellt wird.

Zur Verdeutlichung soll die Übertragung der digitalen Information 0,1,1,0, jedoch mit ansteigendem digitalisiertem Analogwert 3,4,5,6, angegeben werden. Aus der Tabelle gemäß Figur 4 folgt die in Figur 11a dargestellte Abfolge. Die zugehörige zeitliche Ereignismodulation ist in Figur 11b gezeigt.

Die Dauer eines digitalen Symbols ist in Summe mit 29E und 2P konstant.

Ein weiterer Vorteil der Manchester-Codierung besteht darin, dass je nach Form der Ereignisse eine Gleichanteilfreiheit ermöglicht wird, was zum Beispiel bei induktiven Übertragungsverfahren besonders vorteilhaft ist. Gleichzeitig ist eine Taktrückgewinnung möglich.

Auch hier ist eine zusätzliche Steigerung der Übertragungsgeschwindigkeit entsprechend dem im Zusammenhang mit Figur 9 dargestellten Ausführungsbeispiel mittels ASK möglich.

Es ist auch möglich, dass zwar eine digitale Manchester-Codierung eingesetzt wird, der Analogwert jedoch bei jedem Periodenpaket angepasst wird. Dies hat zur Folge, dass sich die Anzahl der digitalisierten Analogwerte verdoppelt, die Äquidistanz jedoch nur beim Digitalwert im eingeschwungenen Zustand einer Regelung näherungsweise vorhanden bleibt. Da die Übertragung gemäß der Manchester-Kodierung in Signalwechseln (low/high oder high/low) erfolgt, kann es zum Beispiel möglich sein, dass bei der Übertragung einer digitalen Information low ein anderer Analogwert vorliegt als bei der digitalen Information high. Somit würde sich in Summe eine Signallänge ergeben, welche nicht konstant ist.

Indirekte ADEM:

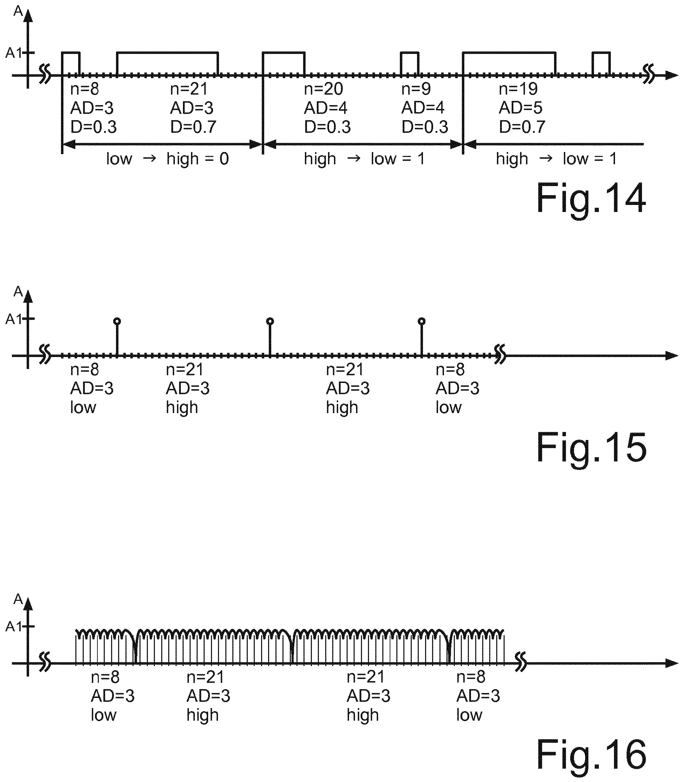

Bei der indirekten ADEM kann ein beliebiges Signal mit steuerbarer Periodendauer $T(n)=n^*\Delta t$ dazu genutzt werden, einen digitalisierten Analogwert zu übertragen. Entscheidend ist, dass eine Auswertevorrichtung vorhanden ist, welche während der Periodendauer T die Anzahl an Ereignissen ermittelt, welche aufgetreten sind oder auftreten könnten. Der letztgenannte Fall erschließt sich deutlicher unter Bezugnahme auf Fig. 15 unten. Hier wird die Anzahl an möglichen Ereignissen zwischen den tatsächlich übertragenen Ereignissen gezählt.

Bei der indirekten ADEM kann generell zur analogen und parallelen digitalen Datenübertragung eine Art Frequenzmodulation genutzt werden, wenn der Übertragungskanal zum Beispiel bei jedem Ereignispaket mit einer beliebigen periodischen Signalform der Frequenz $\dfrac{1}{T(n)}$ angeregt wird.

Figur 12 zeigt in diesem Zusammenhang die zeitliche Abfolge der Übertragung des aus Figur 11a bekannten Signals mittels einer sinusförmigen, Manchester-codierten indirekten ADEM.

Besonders bevorzugt kann die Anregung des Übertragungskanals pro Ereignispaket für eine Zeitdauer $t_{on}(n)=n^*\Delta t^*D$ aktiviert und für eine Zeitdauer $t_{off}(n)=n^*\Delta t^*(1-D)$ deaktiviert werden. Die Zeitdauer $\Delta t$ sowie das Tastverhältnis D können in diesem Fall beliebig gewählt werden, sie können sogar zur Erweiterung der Übertragungsmöglichkeiten ebenfalls moduliert werden.

Figur 13 zeigt in diesem Zusammenhang die Übertragung der Abfolge von Figur 11a mittels einer rechteckförmigen, Manchester-codierten, indirekten ADEM, wobei das Tastverhältnis D zu 0,5 gewählt wurde.

Durch eine zusätzliche Modulation des Tastverhältnisses D ist es beispielsweise möglich, die Anzahl an übertragbaren, digitalisierten Analogwerten oder der Digitalwerte beliebig zu steigern. So könnten zum Beispiel mit $n_{AD}=8$ und D=[0,3; 0,7] 16 statt acht Signalformen erzeugt und übertragen werden, was zum Beispiel für eine Verdopplung der Anzahl an Analogwerten entsprechend $n_{AD_{eff}}=2^*n_{AD}$ genutzt werden kann. Darüber hinaus könnte auch D=f(AD$_x$) sein, oder ein drittes Signal zugrunde liegen.

Figur 14 zeigt in diesem Zusammenhang eine rechteckförmige, Manchester-codierte, indirekte ADEM mit zusätzlicher Pulsweitenmodulation durch Bereitstellung zweier Werte, nämlich 0,3 und 0,7, für das Tastverhältnis D für das in Figur 11a dargestellte Beispiel.

Die Umsetzung der in Figur 11a dargestellten Abfolge gemäß Figur 11b kann invertiert werden. Ist zum Beispiel eine schaltungstechnische Auswertevorrichtung vorhanden, welche die Dauer zwischen zwei beliebigen Vorkommnissen (im genannten Ausführungsbeispiel entspricht dies den Pausen) misst und die Anzahl an möglichen Ereignissen zwischen den Vorkommnissen bestimmt, ist ebenfalls eine parallele Übertragung von Analog- und Digitalwerten möglich. Im Vergleich zur Darstellung von Figur 11b ändert sich die Polarität, was für die elektrische Effizienz und die elektromagnetische Verträglichkeit vorteilhaft sein kann, siehe hierzu Figur 15.

Diese Modulationsform hat vorteilhafte Auswirkungen auf den elektrischen Wirkungsgrad und auf die elektromagnetische Verträglichkeit, weil die Anregung des Kanals im Mittel sehr gering ist. Ein ähnlicher Effekt lässt sich erzielen, wenn das in den Figuren 13 und 14 dargestellte Ausführungsbeispiel mit einem niedrigen Wert für das Tastverhältnis D betrieben wird.

Ist die direkte Bestimmung der Anzahl an Ereignissen aufgrund einer Trägheit des Übertragungskanals nicht möglich, wird bevorzugt eine einhüllende Ereignisfunktion detektiert. Wird zum Beispiel der physikalische Kanal für die Zeit $t_{on}(n)$ in beliebiger Art angeregt und unmittelbar darauffolgend für die Zeit $t_{off}(n)$ nicht angeregt, kann die Periodendauer der einhüllenden Funktion ermittelt und sowohl der übertragene Analogwert als auch der Digitalwert bestimmt werden.

Figur 16 zeigt in diesem Zusammenhang für das Beispiel von Figur 8a, dass die übertragene Information in der Hüllkurve einer Signalübertragung enthalten ist.

Dabei ist die Art der Anregung beliebig. So kann der Kanal während der Zeit $t_{on}(n)$ zum Beispiel mit einem konstanten Wert oder einer Frequenz angeregt werden. Alternativ könnte der Kanal, anstatt zu ruhen, auch in der zweiten Phase $t_{off}(n)$ in einer anderen Weise als in der ersten Phase angeregt werden.

**Patentansprüche**

1. Verfahren zur Übertragung von analoger und digitaler Information bei der Übertragung von Energie zwischen einem Leistungssender (10) und einem davon galvanisch getrennten Leistungsempfänger (12), folgenden Schritt umfassend:

   a) Bereitstellen der zu übertragenden analogen (22a) und digitalen (24a) Information;
   **gekennzeichnet durch** folgende weitere Schritte:
   b) Festlegen der Anzahl $n_{AD}$ möglicher Werte $AD_i$, i=1 bis $n_{AD}$, die beim Digitalisieren der analogen Information möglich sind, sowie den Wertebereich der Werte $AD_i$;
   c) Zuordnen eines Digitalwerts $D_x$ in binärer Schreibweise zu der digitalen Information;
   d) Festlegen einer minimal zu übertragenden Ereigniszahl $n_{min}$;
   e) Festlegen einer maximal zu übertragenden Ereigniszahl $n_{max}$;
   f) Festlegen einer ersten Wertemenge $n_{low}$ definiert **durch**:
   $n_{low}(AD_i)=n_{min}+f1(AD_i)$, i=1 bis $n_{AD}$, wobei f1 $(AD_i)$ eine erste Funktion möglicher Werte $AD_i$ darstellt;
   g) Festlegen einer zweiten Wertemenge $n_{high}$ definiert **durch**:
   $n_{high}(AD_i)=n_{max}-f2(AD_i)$, i=1 bis $n_{AD}$, wobei f2$(AD_i)$ eine zweite Funktion möglicher Werte $AD_i$ darstellt;
   h) Digitalisieren der analogen Information (22a) zum Erhalt eines digitalisierten Analogwerts $AD_x$;
   i) Bestimmen einer Ereigniszahl
   $n_{ADx}$ für den digitalisierten Anologwert $AD_x$ für das jeweils zu übertragende Bit des Digitalwerts D mit Hilfe der in Schritt f) oder Schritt g) festgelegten Wertemenge, wobei:
   $n=n_{low}(AD_x)$wenn das aktuelle, zu übertragende Bit des Digitalwerts $D_x$ eine logische 0 ist;
   $n_{ADx}=n_{high}(AD_x)$ wenn das aktuelle, zu übertragende Bit des Digitalwerts $D_x$ eine logische 1 ist, oder umgekehrt; und
   j) Übertragen eines Signals, das zumindest mit der in Schritt i) bestimmten Ereigniszahl korreliert ist.

2. Verfahren nach Anspruch 1,
   **dadurch gekennzeichnet,**
   **dass** in Schritt j) ein Signal übertragen wird, das mit der seriellen Abfolge der in Schritt i) für jedes Bit des Digitalwerts $D_x$ bestimmten Ereigniszahl korreliert ist.

3. Verfahren nach einem der Ansprüche 1 oder 2,
   **dadurch gekennzeichnet,**
   **dass** für das zu übertragenden Bit des Digitalwerts ein Signal übertragen wird, das sowohl mit einer Anzahl an Ereignissen gemäß der in Schritt i) bestimmten Ereigniszahl $n_{low}$ als auch einer Anzahl an Ereignissen gemäß der in Schritt i) bestimmten Ereigniszahl $n_{high}$ korreliert ist, wobei eine logische 1 des jeweils zu übertragenden Bits des Digitalwerts $D_x$ durch eine Abfolge $n_{high}$-$n_{low}$ und eine logische 0 durch eine Abfolge $n_{low}$-$n_{high}$ der Amplitude des Signals dargestellt wird, oder umgekehrt.

4. Verfahren nach einem der Ansprüche 1 bis 3,
   **dadurch gekennzeichnet,**
   **dass** in Schritt j) die in Schritt i) bestimmte Ereigniszahl in Form einer bestimmten Anzahl von vorgebbaren Ereignissen übertragen wird.

5. Verfahren nach Anspruch 4,

**dadurch gekennzeichnet,**

**dass** in dem Signal zwischen den einzelnen, zu übertragenden Bits des Digitalwerts $D_x$ ein davon verschiedenes Signal eingefügt wird.

6. Verfahren nach Anspruch 5,
**dadurch gekennzeichnet,**
**dass** das Signal der einzelnen, zu übertragenden Bits eine Abfolge von Impulsen umfasst, wobei das davon verschiedene Signal eine Pause, Nullsignal, darstellt; oder dass das Signal der einzelnen, zu übertragenden Bits eine vorgebbare Zeitdauer eines Nullsignals umfasst, wobei das davon verschiedene Signal einen Impuls darstellt.

7. Verfahren nach einem der Ansprüche 4 bis 6,
**dadurch gekennzeichnet,**
**dass** in dem Signal von einem aktuellen Bit des zu übertragenden Digitalwerts $D_x$ zu einem nächsten Bit ein Amplitudenwechsel vorgenommen wird.

8. Verfahren nach einem der Ansprüche 1 bis 3,
**dadurch gekennzeichnet,**
**dass** in Schritt j) die in Schritt i) bestimmte Ereigniszahl in Form eines Signals mit einer Periodendauer, die von der in Schritt i) bestimmten Ereigniszahl abhängig ist, übertragen wird.

9. Verfahren nach Anspruch 8,
**dadurch gekennzeichnet,**
**dass** zur Erzeugung der Periodendauer eine Anregung der Übertragung mit einer vorgebbaren Funktion für eine Zeitdauer

$$t_{on}=n_{low}*\Delta t*D \text{ oder } t_{on}=n_{high}*\Delta t*D$$

aktiviert und für eine Zeitdauer

$$t_{off}=n_{low}*\Delta t*(1-D) \text{ oder } t_{off}=n_{high}*\Delta t*(1-D)$$

deaktiviert wird, wobei $\Delta t$ eine vorgebbare Zeitdauer und D ein vorgebbares Tastverhältnis ist.

10. Verfahren nach Anspruch 9,
**dadurch gekennzeichnet,**
**dass** die Zeitdauer $\Delta t$ und/oder das Tastverhältnis D in Abhängigkeit des zu übertragenden digitalisierten Analogwerts $AD_x$ variiert, insbesondere moduliert wird.

11. Verfahren nach einem der vorhergehenden Ansprüche,
**dadurch gekennzeichnet,**
**dass** beim Empfänger der Übertragung folgender Schritt ausgeführt wird:

k) Auswerten des empfangenen Signals zum Bestimmen des gesendeten Analogwerts und des gesendeten Digitalwerts.

12. Verfahren nach Anspruch 11,
**dadurch gekennzeichnet,**
**dass** in Schritt k) die Hüllkurve des empfangenen Signals, insbesondere die Periodendauer der einhüllenden Funktion, ausgewertet wird.

13. Verfahren nach einem der vorhergehenden Ansprüche,
**dadurch gekennzeichnet,**
**dass** f1(ADi) und f2(ADi) derart gewählt werden, dass die erste Wertemenge und die zweite Wertemenge disjunkt sind.

**14.** Verfahren nach einem der Ansprüche 11 oder 12,
**dadurch gekennzeichnet,**
**dass** f1(ADi) und f2(ADi) derart gewählt werden, dass die erste Wertemenge und die zweite Wertemenge einen gemeinsamen Überlappungsbereich aufweisen, wobei in Schritt k) zum Bestimmen des gesendeten Analogwerts und des gesendeten Digitalwerts für einen Wert im Überlappungsbereich eine zuvor erstellte Wahrscheinlichkeitsfunktion verwendet wird.

**15.** Verfahren nach Anspruch 14,
**dadurch gekennzeichnet,**
**dass** es weiterhin folgenden Schritt umfasst:

l) Erstellen einer Statistik für die Zuordnung von Werten im Überlappungsbereich zur ersten oder zweiten Wertemenge in Abhängigkeit mindestens eines zuvor gesendeten, eindeutig der ersten oder der zweiten Wertemenge zuordenbaren Werts.

**16.** Vorrichtung zur Durchführung des Verfahrens nach einem der Ansprüche 1 bis 15.

**Claims**

**1.** Method for transferring analog and digital information in the transfer of energy between a power transmitter (10) and a power receiver (12) galvanically separated therefrom, including the following step of:

a) providing the analog (22a) and digital (24a) information to be transferred; **characterized by** the following further steps of:
b) setting the number $n_{AD}$ of possible values $AD_i$, i=1 to $n_{AD}$, which are possible in digitizing the analog information, as well as the range of values of the values $AD_i$;
c) associating a digital value $D_x$ in binary notation with the digital information;
d) setting an event number $n_{min}$ to be minimally transferred;
e) setting an event number $n_{max}$ to be maximally transferred;
f) setting a first set of values $n_{low}$ defined by:
$n_{low}(AD_i)=n_{min}+f1 (AD_i)$, i=1 to $n_{AD}$, wherein f1 $(AD_i)$ represents a first function of possible values $AD_i$;
g) setting a second set of values $n_{high}$ defined by:
$n_{high}(AD_i)=n_{max}-f2(AD_i)$, i=1 to $n_{AD}$, wherein f2$(AD_i)$ represents a second function of possible values $AD_i$;
h) digitizing the analog information (22a) for obtaining a digitized analog value $AD_x$;
i) determining an event number $n_{ADx}$ for the digitized analog value $AD_x$ for the bit of the digital value $D_x$ respectively to be transferred with the aid of the set of values set in step f) or step g), wherein:

$n_{ADx}=n_{low}(AD_x)$ if the current bit of the digital value $D_x$ to be transferred is a logical 0;
$n_{ADx}=n_{high}(AD_x)$ if the current bit of the digital value $D_x$ to be transferred is a logical 1, or vice versa; and

j) transferring a signal correlated at least with the event number determined in step i).

**2.** Method according to claim 1,
**characterized in that**
a signal is transferred in step j), which is correlated with the serial sequence of the event number determined in step i) for each bit of the digital value $D_x$.

**3.** Method according to any one of claims 1 or 2,
**characterized in that**
a signal is transferred for the bit of the digital value to be transferred, which is correlated both with a number of events according to the event number $n_{low}$ determined in step i) and a number of events according to the event number $n_{high}$ determined in step i), wherein a logical 1 of the bit of the digital value $D_x$ respectively to be transferred is represented by a sequence $n_{high}-n_{low}$ and a logical 0 is represented by a sequence $n_{low}-n_{high}$ of the amplitude of the signal, or vice versa.

**4.** Method according to any one of claims 1 to 3,
**characterized in that**

in step j), the event number determined in step i) is transferred in the form of a certain number of presettable events.

5. Method according to claim 4,
   **characterized in that**
   in the signal, between the individual bits of the digital value $D_x$ to be transferred, a signal different therefrom is inserted.

6. Method according to claim 5,
   **characterized in that**
   the signal of the individual bits to be transferred includes a sequence of pulses, wherein the signal different therefrom represents a pause, zero signal; or that the signal of the individual bits to be transferred includes a presettable period of time of a zero signal, wherein the signal different therefrom represents a pulse.

7. Method according to any one of claims 4 to 6,
   **characterized in that**
   an amplitude change is performed in the signal from a current bit of the digital value $D_x$ to be transferred to a next bit.

8. Method according to any one of claims 1 to 3,
   **characterized in that**
   in step j), the event number determined in step i) is transferred in the form of a signal with a periodic time, which depends on the event number determined in step i).

9. Method according to claim 8,
   **characterized in that**
   for generating the periodic time, an excitation of the transfer is activated for a period of time

$$t_{on}=n_{low}*\Delta t*D \text{ or } t_{on}=n_{high}*\Delta t*D$$

   and deactivated for a period of time

$$t_{off}=n_{low}*\Delta t*(1-D) \text{ or } t_{off}=n_{high}*\Delta t*(1-D)$$

   with a presettable function, wherein $\Delta t$ is a presettable period of time and $D$ is a presettable duty cycle.

10. Method according to claim 9,
    **characterized in that**
    the period of time $\Delta t$ and/or the duty cycle $D$ are varied, in particular modulated, depending on the digitized analog value $AD_x$ to be transferred.

11. Method according to any one of the preceding claims,
    **characterized in that**
    the following step is executed at the receiver of the transfer:

    k) evaluating the received signal for determining the transmitted analog value of the transmitted digital value.

12. Method according to claim 11,
    **characterized in that**
    the envelope of the received signal, in particular the periodic time of the enveloping function, is evaluated in step k).

13. Method according to any one of the preceding claims,
    **characterized in that**
    f1 (ADi) and f2(ADi) are selected such that the first set of values and the second set of values are disjoint.

14. Method according to any one of claims 11 or 12,
    **characterized in that**
    f1 (ADi) and f2(ADi) are selected such that the first set of values and the second set of values have a common overlap range, wherein a previously established probability function is used in step k) for determining the transmitted analog value and the transmitted digital value for a value in the overlap range.

**15.** Method according to claim 14,
**characterized in that**
it further includes the following step of:

l) creating statistics for the association of values in the overlap range with the first or the second set of values depending on at least one previously transmitted value uniquely associable with the first or the second set of values.

**16.** Device for performing the method according to any one of claims 1 to 15.

**Revendications**

**1.** Procédé de transmission d'information analogique et numérique lors du transfert d'énergie entre un émetteur de puissance (10) et un récepteur de puissance (12), qui en est séparé galvaniquement, comprenant l'étape suivante, consistant à :

a) mettre à disposition l'information analogique (22a) et numérique (24a) à transmettre,
**caractérisé par** les autres étapes suivantes, consistant à :
b) définir le nombre $n_{AD}$ de valeurs possibles $AD_i$, i = 1 jusquà $n_{AD}$, qui sont possibles lors de la numérisation de l'information analogique, de même que la plage des valeurs $AD_i$ ;
c) affecter une valeur numérique $D_x$ en notation binaire à l'information numérique ;
d) définir un nombre d'événements minimum $n_{min}$ à transmettre ;
e) définir un nombre d'événements maximum $n_{max}$ à transmettre ;
f) définir un premier ensemble de valeurs $n_{bas}$, défini par :
$n_{bas}(AD_i) = n_{min} + f1(AD_i)$, i = 1 à $n_{AD}$, $f1(AD_i)$ représentant une première fonction de valeurs ADi possibles ;
g) définir un deuxième ensemble de valeurs $n_{haut}$, défini par :
$n_{haut}(AD_i) = n_{max} - f2(AD_i)$, i = 1 à $n_{AD}$, $f2(AD_i)$ représentant une deuxième fonction de valeurs ADi possibles ;
h) numériser l'information analogique (22a), pour obtenir une valeur analogique numérisée $AD_x$ ;
i) déterminer un nombre d'événements $n_{ADx}$ pour la valeur analogique numérisée $AD_x$ pour le bit, à transmettre respectivement, de la valeur numérique $D_x$ à l'aide de l'ensemble de valeurs, défini au cours de l'étape f) ou de l'étape g),
$n_{ADx} = n_{bas}(AD_x)$, lorsque le bit actuel, à transmettre, de la valeur numérique $D_x$, est un 0 logique ;
$n_{ADx} = n_{haut}(AD_x)$, lorsque le bit actuel, à transmettre, de la valeur numérique $D_x$, est un 1 logique ou l'inverse et
j) transmettre un signal, qui est corrélé au moins avec le nombre d'événements, déterminé au cours de l'étape i).

**2.** Procédé selon la revendication 1,
**caractérisé en ce**
qu'au cours de l'étape j), un signal est transmis, qui est corrélé avec la séquence sérielle du nombre d'événements, déterminé au cours de l'étape i) pour chaque bit de la valeur numérique $D_x$.

**3.** Procédé selon l'une des revendications 1 ou 2,
**caractérisé en ce que**,
pour le bit, à transmettre, de la valeur numérique, un signal est transmis, qui est corrélé tant avec un nombre d'évènements conformément au nombre d'événements $n_{bas}$, déterminé au cours de l'étape i) qu'avec un nombre d'événements, conformément au nombre d'évènements $n_{haut}$, déterminé au cours de l'étape i), un 1 logique du bit, respectivement à transmettre, de la valeur numérique $D_x$ étant représenté par une séquence nhaut - nbas et un 0 logique par une séquence nbas - nhaut de l'amplitude du signal ou l'inverse.

**4.** Procédé selon l'une des revendications 1 à 3,
**caractérisé en ce**
qu'au cours de l'étape j), le nombre d'événements, déterminé au cours de l'étape i), est transmis sous la forme d'un nombre déterminé d'événements pouvant être prescrit.

**5.** Procédé selon la revendication 4,

**caractérisé en ce que**,
dans le signal entre les divers bits à transmettre de la valeur numérique $D_x$, un signal différent du premier est inséré.

6. Procédé selon la revendication 5,
   **caractérisé en ce que**
   le signal des divers bits à transmettre comprend une séquence d'impulsions, le signal différent du premier représentant une pause, un signal zéro ou que le signal des divers bits à transmettre représente une durée pouvant être prescrite d'un signal zéro, le signal différent du premier représentant une impulsion.

7. Procédé selon l'une des revendications 4 à 6,
   **caractérisé en ce que**,
   dans le signal d'un bit actuel de la valeur numérique $D_x$ à transmettre à un bit suivant, il est procédé à un changement d'amplitude.

8. Procédé selon l'une des revendications 1 à 3,
   **caractérisé en ce que**,
   au cours de l'étape j), le nombre d'événements, déterminé au cours de l'étape i), est transmis sous la forme d'un signal avec une durée de période, qui est fonction du nombre d'événements, déterminé au cours de l'étape i).

9. Procédé selon la revendication 8,
   **caractérisé en ce que**,
   pour générer la durée de période, une excitation de la transmission est activée avec une fonction pouvant être prescrite pour une durée

$$t_{on} = n_{bas} * \Delta t * D \text{ ou } t_{on} = n_{haut} * \Delta t * D$$

et est désactivée pour une durée

$$t_{off} = n_{bas} * \Delta t * (1 - D) \text{ ou } t_{off} = n_{haut} * \Delta t * (1 - D),$$

$\Delta t$ étant une durée pouvant être prescrite et D un facteur d'utilisation d'impulsions pouvant être prescrit.

10. Procédé selon la revendication 9,
    **caractérisé en ce que**
    la durée $\Delta t$ et / ou le facteur d'utilisation d'impulsions D varient en fonction de la valeur analogique $AD_x$ numérisée à transmettre, en particulier qu'elles sont modulées.

11. Procédé selon l'une des revendications précédentes,
    **caractérisé en ce que**
    l'étape suivante est exécutée chez le destinataire de la transmission :

    k) évaluer le signal reçu, pour déterminer la valeur analogique émise et la valeur numérique émise.

12. Procédé selon la revendication 11,
    **caractérisé en ce,**
    **qu'**au cours de l'étape k), la courbe enveloppe du signal reçu, en particulier la durée de période de la fonction enveloppante, est évaluée.

13. Procédé selon l'une des revendications précédentes,
    **caractérisé en ce que**
    f1 ($AD_i$) et f2($AD_i$) sont choisis, de telle sorte que le premier ensemble de valeurs et le second ensemble de valeurs sont disjoints.

14. Procédé selon l'une des revendications 11 ou 12,
    **caractérisé en ce que**

f1 (AD$_i$) et f2(AD$_i$) sont choisis, de telle sorte que le premier ensemble de valeurs et le second ensemble de valeurs présentent une zone de chevauchement commune, au cours de l'étape k), destinée à déterminer la valeur analogique émise et la valeur numérique émise, pour une valeur dans la zone de chevauchement, une fonction de probabilité, établie auparavant, étant utilisée.

15. Procédé selon la revendication 14,
**caractérisé en ce**
**qu'**il comprend en outre l'étape suivante, consistant à :

   l) établir une statistique pour l'affectation de valeurs dans la zone de chevauchement au premier ou au second ensemble de valeurs, en fonction au moins d'une valeur attribuable, émise auparavant, explicitement, du premier ou du second ensemble de valeurs.

16. Appareil, destiné à exécuter le procédé selon l'une des revendications 1 à 15.

10

| Leistungssender | | Leistungsempfänger | 12 |
| Leistungssteller | → | Leistungsentnahme (Last) | |
| ↑ | | ↓ | |
| Datenempfänger | ← | Regeldatenerfassung, Datensender | 14 |

16

# Fig.1
(SdT)

# Fig.2

| $AD_{min} = AD_1$ | $AD_{min} + 1$ | $AD_{min} + 2$ | ... | $AD_{max} = AD_{n_{AD}}$ | $AD_i$ |
|---|---|---|---|---|---|
| $n_{min}$ | $n_{min} + AD_{min} + 1$ | $n_{min} + AD_{min} + 2$ | ... | $n_{min} + AD_{max}$ | $n_{low}(AD_i)$ |
| $n_{max}$ | $n_{max} - (AD_{min} + 1)$ | $n_{max} - (AD_{min} + 2)$ | ... | $n_{max} - AD_{max}$ | $n_{high}(AD_i)$ |

# Fig.3

$n_{min} = 5 \; ; \; n_{max} = 24 \; ; \; n_{AD} = 8 \; ; \; AD_{min} = 0$

| 0 | 1 | 2 | 3 | 4 | 5 | 6 | 7 | $AD_i \; i = 1 \; bis \; n_{AD}$ |
|---|---|---|---|---|---|---|---|---|
| 5 | 6 | 7 | 8 | 9 | 10 | 11 | 12 | $n_{low}(AD_i)$ |
| 24 | 23 | 22 | 21 | 20 | 19 | 18 | 17 | $n_{high}(AD_i)$ |

# Fig.4

# Fig.5

# Fig.6

# Fig.7

a)

0                    1      1      0

8 Ereignisse [E] + Pause [P], 21E P, 21E P, 8E P,

$n_{low}$                    $n_{high}$   $n_{high}$   $n_{low}$

b)

n = 8          n = 21         n = 21         n = 8
$AD_x$ = 3      $AD_x$ = 3      $AD_x$ = 3      $AD_x$ = 3
$n_{low}$        $n_{high}$       $n_{high}$       $n_{low}$

# Fig.8

a)

8 Ereignisse [e], 21Ereignisse [E], 21e, 8E …

b)

n = 8          n = 21         n = 21         n = 8
$AD_x$ = 3      $AD_x$ = 3      $AD_x$ = 3      $AD_x$ = 3
$n_{low}$        $n_{high}$       $n_{high}$       $n_{low}$

# Fig.9

$\sum=29$     $\sum=29$     $\sum=29$     $\sum=29$

low → high   high → low   high → low   low → high

0      1      1      0

8E P 21E P, 21E P 8E P, 21E P 8E P, 8E P 21E P ...

**Fig.10**

## a)

0       1       1       0

8E P 21E P, 20E P 9E P, 19E P 10E P, 11E P 18E P

3       4       5       6

## b)

**Fig.11**

**Fig.12**

**Fig.13**

17

A
A1

n=8        n=21        n=20        n=9        n=19
AD=3       AD=3        AD=4        AD=4       AD=5
D=0.3      D=0.7       D=0.3       D=0.3      D=0.7

low → high = 0        high → low = 1        high → low = 1

Fig.14

A
A1

n=8        n=21        n=21        n=8
AD=3       AD=3        AD=3        AD=3
low        high        high        low

Fig.15

A
A1

n=8        n=21        n=21        n=8
AD=3       AD=3        AD=3        AD=3
low        high        high        low

Fig.16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014340033 A1